Europäisches Patentamt

European Patent Office

Office européen des brevets

(19)

(11) **EP 0 763 167 B1**

(12) ## EUROPÄISCHE PATENTSCHRIFT

(45) Veröffentlichungstag und Bekanntmachung des Hinweises auf die Patenterteilung:
**02.12.1998 Patentblatt 1998/49**

(51) Int Cl.6: **F02D 41/14**, F02D 41/26, F02D 43/04

(21) Anmeldenummer: **95920730.9**

(22) Anmeldetag: **26.05.1995**

(86) Internationale Anmeldenummer:
**PCT/DE95/00689**

(87) Internationale Veröffentlichungsnummer:
**WO 95/33132 (07.12.1995 Gazette 1995/52)**

(54) **VERFAHREN ZUR STEUERUNG/REGELUNG VON PROZESSEN IN EINEM KRAFTFAHRZEUG**

METHOD FOR CONTROLLING/REGULATING PROCESSES IN MOTOR VEHICLES

PROCEDE DE REGULATION/COMMANDE DE PROCESSUS DANS UN VEHICULE A MOTEUR

(84) Benannte Vertragsstaaten:
**DE FR GB IT**

(30) Priorität: **28.05.1994 DE 4418731**

(43) Veröffentlichungstag der Anmeldung:
**19.03.1997 Patentblatt 1997/12**

(73) Patentinhaber: **ROBERT BOSCH GMBH**
**70442 Stuttgart (DE)**

(72) Erfinder:
- **ADLER, Walter**
  **D-64579 Gernsheim (DE)**
- **SCHMITT, Manfred**
  **D-64646 Heppenheim (DE)**
- **TOLLE, Henning**
  **D-64380 Rossdorf (DE)**
- **ULLRICH, Thorsten**
  **D-64579 Gernsheim (DE)**

(56) Entgegenhaltungen:
EP-A- 0 152 604          EP-A- 0 241 030
DE-C- 3 603 137          US-A- 4 862 855

- **Patent Abstracts of Japan, Band 17, Nr 306(M-1428); & JP,A,0526082 (HITACHI LTD), 1993-02-02**

EP 0 763 167 B1

**Beschreibung**

Stand der Technik

Die Erfindung geht aus von einem Verfahren zur Steuerung von Prozessen in einem Kraftfahrzeug gemäß der Gattung des Hauptanspruchs. Es ist schon ein Verfahren zur Steuerung von Prozessen in einem Kraftfahrzeug aus der DE 34 08 215 A1 bekannt. Die daraus bekannten Verfahren dienen insbesondere zur Steuerung der Lambda-Regelung, Klopfregelung, Zündzeitpunkt-Regelung, Einspritz-Regelung Ladedruck-Regelung oder auch Leerlauf-Regelung.

Bei dem dortigen Verfahren wird mit Hilfe eines im Speicher des Steuergerätes abgelegten Kennfeldes eine Vorsteuerung der zu regelnden Betriebsgrößen bewirkt. Das Kennfeld wird durch eine Anzahl von im Speicher vorhandenen Stützstellen repräsentiert. Mit Hilfe einer überlagerten Regelung wird die Abweichung des für einen Arbeitspunkt ausgelesenen Kennfeldwertes zu einem optimalen Sollwert ermittelt. Das Kennfeld wird aufgrund der festgestellten Abweichungen angepaßt. Hierzu wird pro Stützstelle ein Bereich um die Stützstelle herum als Einzugsbereich der Stützstelle definiert. Solange sich der Arbeitspunkt in einem Einzugsbereich einer Stützstelle aufhält, wird bei jedem Kennfeldzugriff die Abweichung des ermittelten Kennfeldwertes an der Position des Arbeitspunktes von einem vorgegebenen Sollfunktionsverlauf ermittelt. Die festgestellten Abweichungen werden gemittelt. Nachdem der Arbeitspunkt den Einzugsbereich der Stützstelle verlassen hat, wird die Stützstelle des Einzugsbereichs um den gemittelten Korrekturwert korrigiert.

Nachteilig an dem dortigen Verfahren ist, daß nach der Anpassung des Kennfeldes die angepaßte Stützstelle in der Regel nicht auf der Kurve des Sollwertfunktionsverlaufs liegt. Eine exakte Anpassung der Stützstellen an den Sollwertfunktionsverlauf ist daher meistens nicht in einem Schritt möglich. Außerdem sind die dort erwähnten Vorsteuerkennfelder durchweg als Rasterkennfelder ausgeführt. Bei Rasterkennfeldern sind die Stützstellen an den vorgegebenen Knotenpunkten eines den Eingangsraum des Kennfeldes einteilenden festen Rasters positioniert. Eine Kennfeldanpassung kann nicht so durchgeführt werden, daß die Stützstellendichte lokal anpaßbar ist. Bei grober Quantisierung wird die maximale Kennfelddynamik begrenzt, bei feiner Quantisierung können in selten angefahreren Bereichen unter Umständen nicht alle Stützstellen häufig genug angepaßt werden und es entstehen Wissenslücken.

Aus einem Artikel von P.J. Schmidt, J. Wahl, XXI Fisita Congress 6/1986, Papier 865080 ist bereits ein Fahrzeug mit einem lernenden Rasterfeld beschrieben. Bei einem derartigen Rasterkennfeld werden die Stützstellen in einem fest vorgegebenen Raster eingetragen. Unter dem Schlagwort „Zeltdachverfahren" wird ein Lernverfahren vorgeschlagen, bei dem ein Korrekturwert in Abhängigkeit von einer Nachbarschaftsbeziehung stärker oder weniger stärker beeinflußt wird.

Dabei werden die unmittelbaren Nachbarn am stärksten beeinflußt, die nächsten Nachbarn weniger stark und die übernächsten Nachbarn noch weniger stark beeinflußt.

Aus einem Artikel von M. Schmitt und H. Tolle, Automobiltechnische Zeitschrift 96 (1994), Seite 28 bis 31 sind bereits Kennfelder bekannt, bei denen jeder Stützstelle zusätzlich eine Information über die Position der Stützstelle innerhalb des Kennfeldes zugeordnet ist. Weiterhin wird ausgesagt, daß derartige Kennfelder besonders gut für ein Lernverfahren geeignet sind.

Das erfindungsgemäße Verfahren mit den kennzeichnenden Merkmalen des Hauptanspruchs hat demgegenüber den Vorteil, daß die Kennfeldstruktur sehr genau dem Sollwertfunktionsverlauf angepaßt werden kann. Es wird nämlich nicht bloß die Abweichung zum Sollwertfunktionsverlauf ermittelt sondern zusätzlich auch die Position des ermittelten Korrekturwertes berücksichtigt. Außerdem wird der ermittelte Korrekturwert nicht bloß einer Stützstelle zugeordnet, sondern der ermittelte Korrekturwert wird auf mehrere zu dem Korrekturwert benachbarte Stützstellen verteilt. Hierdurch wird das Kennfeld gleich in einem größeren Bereich dem Sollwertfunktionsverlauf angepaßt. Bei späterer Interpolation des Kennfeldwertes an der Position des Korrekturwertes wird der zuvor errechnete Korrekturwert exakt ermittelt. Dadurch, daß das Kennfeld nicht als Rasterkennfeld ausgebildet ist, ergibt sich insbesondere die Möglichkeit, eine Korrektur am Ort ihres Entstehens einzutragen. Weiterhin vorteilhaft ist, daß mit dem erfindungsgemäßen Verfahren eine schnelle, detaillierte und sichere Kennfeldanpassung auch mehrdimensionaler Kennfelder möglich wird. Bei dem erfindungsgemäßen Verfahren wird auch die Problematik der Schwingneigung, wie sie bei der Kennfeldanpassung von Rasterkennfeldern entstehen kann, vermieden.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, daß bei der Kennfeldanpassung durch Änderung vorhandener Stützstellen diejenigen Stützstellen korrigiert werden, die auch zur Interpolation eines Kennfeldwertes an der Position des Korrekturwertes verwendet Würden. Dadurch wird es möglich, die inverse Interpolationsvorschrift für die Berechnung der einzelnen Korrekturen der Interpolationsstützstellen heranzuziehen.

Ebenfalls vorteilhaft ist, daß zur Interpolation eines Kennfeldwertes an der Position eines Arbeitspunktes des Prozesses eine bestimmte Anzahl der zu dem Arbeitspunkt nächstbenachbarten Stützstellen herangezogen werden. Dieses Prinzip wird auch bei Rasterkennfeldern angewendet und hat den Vorteil, daß das Interpolationsergebnis höchste

2

Genauigkeit aufweist. Für mehrdimensionale Kennfelder ist es vorteilhaft, wenn die bestimmte Anzahl der Stützstellen der Dimension des Kennfeldes entspricht. Dadurch wird der Rechenaufwand für die Interpolation gering gehalten.

Darüber hinaus vorteilhaft ist, daß die Kennfeldanpassung nur in stationären Betriebsphasen durchgeführt wird. Nur in diesem Fall repräsentieren die Korrekturdatensätze das im Kennfeld nachzubildende Prozeßverhalten. Die stationäre Betriebsphase kann sehr einfach dadurch erkannt werden, daß der Arbeitspunkt für eine bestimmte Mindestanzahl von Kennfeldzugriffen innerhalb eines begrenzten Bereiches des Kennfeldes verharrt. Um den Rechenaufwand gering zu halten, ist es dann wiederum sinnvoll, wenn der begrenzte Bereich durch die Interpolationsstützstellengruppe des aktuellen Arbeitspunktes gebildet wird.

Andererseits ist es ebenfalls vorteilhaft, wenn die stationäre Betriebspnase auch daran erkannt wird, daß der Arbeitspunkt sich in zwei benachbarten begrenzten Bereichen des Kennfeldes aufhält. Es kann nämlich auch in einer stationären Betriebsphase der Arbeitspunkt zwischen zwei benachbarten Bereichen hin und her schwanken.

Die Kennfeldanpassung kann vorteilhafterweise am Ende der stationären Betriebsphase durchgeführt werden. Das Ende der stationären Betriebsphase kann einfach daran erkannt werden, daß der Arbeitspunkt nach der Mindestanzahl von Kennfeldzugriffen innerhalb des begrenzten Kennfeldbereiches diesen Bereich verläßt. Es ist aber auch möglich, das Ende der stationären Betriebsphase daran zu erkennen, daß der Arbeitspunkt nach der Mindestanzahl von Kennfeldzugriffen innerhalb der zwei benachbarten begrenzten Bereiche diese Bereiche verläßt.

Weiterhin vorteilhaft für die Kennfeldanpassung ist, daß bei jedem Kennfeldzugriff einer stationären Betriebsphase Korrekturwerte für das Kennfeld errechnet werden und daß die während einer stationären Betriebsphase ermittelten Korrekturwerte zu einem einzigen repräsentativen Korrekturwert zusammengefaßt werden. Diese Maßnahme dient ebenfalls der Verringerung der Rechenbelastung des Steuergerätes, das das Verfahren realisiert. Die Zusammenfassung kann sehr einfach durch Mittelwertbildung der einzelnen ermittelten Korrekturwerte in der Stationärphase erfolgen. Eine andere Möglichkeit der Zusammenfassung ist eine Filterung, insbesondere eine Tiefpaßfilterung der ermittelten Korrekturwerte.

Weiterhin vorteilhaft ist, daß eine bestimmte Anzahl von Korrekturwerten zu Beginn einer stationären Betriebsphase bei der Zusammenfassung ignoriert wird. Dies dient der Unterdrückung systematischer Verfälschungen, z.B, durch Nachwirken des Dynamikbetriebs (Prozeßdynamik) am Anfang von stationären Phasen.

Weiterhin vorteilhaft ist, daß bei der Änderung von Kennfeldwerten bestimmter im Kennfeld vorhandener Stützstellen, diejenigen Stützstellen korrigiert werden, die die Interpolationsstützstellengruppe für den repräsentativen Korrekturwert darstellen. Dies erleichtert ebenfalls den Anpaßvorgang. Es muß nicht erst eine aufwendige Suche nach den für die Korrektur geeigneten Stützstellen stattfinden. Für die abstandsgewichtete Anpassung ist in Anspruch 17 eine vorteilhafte Vorschrift angegeben. Diese Vorschrift kann insbesondere auch günstig für mehrdimensionale Kennfelder verwendet werden.

Ein vorteilhaftes Korrektur-Kriterium besteht darin, daß der Absolutwert der jeweils ermittelten Korrekturwerte mit einem vorgegebenen Grenzwert verglichen wird und daß die Änderung von Kennfeldwerten der bestimmten vorhandenden Stützstellen dann nicht mehr möglich ist, wenn der Absolutwert den vorgegebenen Grenzwert überschreitet. Für den Fall, daß der Absolutwert den vorgegebenen Grenzwert überschreitet, ist es dann vorteilhaft, daß die Stützstellendichte in einem den repräsentativen Korrekturwert umgebenden Bereich des Kennfeldes durch Verschiebung umliegender Stützstellen in Richtung auf den repräsentativen Korrekturwert vergrößert wird. Die Gefahr von Fehlanpassungen verringert sich dadurch. Für den Fall von Sensordriften bei Kraftfahrzeug-Anwendungen ist diese Maßnahme sinnvoll. Es können dann auch Sensoren eingesetzt werden, die kostengünstiger sind, weil sie z.B. größere Driftgeschwindigkeiten aufweisen. Eine vorteilhafte Vorschrift für die Berechnung der Verschiebungen der Stützstellen der Interpolationsstützstellengruppe des repräsentativen Korrekturwertes ist in Anspruch 21 angegeben.

Weiterhin vorteilhaft ist, daß bei der Kennfeldanpassung durch Hinzufügung einer neuen Stützstelle die neue Stützstelle an der Position des repräsentativen Korrekturwertes in das Kennfeld eingetragen wird. Dadurch entfällt der Aufwand für eine Extrapolation des Korrekturwertes auf umgebende Stützstellen. Der Korrekturwert kann exakt in das Kennfeld eingetragen werden. Für den Fall, daß, um einen vorgegebenen Speicherbedarf nicht zu überschreiten im Hinblick auf die Hinzufügung einer neuen Stützstelle auch eine bereits vorhandene Stützstelle gelöscht werden muß, ist es vorteilhaft, diejenige Stützstelle mit dem minimalen Informationsgehalt zu löschen. Dabei kann der Informationsgehalt einer Stützstelle vorteilhaft durch den Absolutwert des Fehlers, der beim Weglassen der Stützstelle und Interpolation an deren Position entsteht, bestimmt werden. Vorteilhaft ist weiterhin, daß falls der repräsentative Korrekturwert in unmittelbarer Näher einer bereits vorhandenen Stützstelle liegt, keine neue Stützstelle eingetragen wird, sondern die vorhandene nach der Vorschrift gemäß Anspruch 26 ersetzt wird.

Auch wenn sich die lokale Kennfeldsteigung durch Eintragen des Korrekturwertes als neue Stützstelle sehr stark ändern würde, d.h. wenn das Verhältnis von Korrekturhöhe zum Abstand zur nächstgelegenen Stützstelle einen vorgegebenen Wert übersteigt, wird die nächstgelegene Stützstelle korrigiert, weil sie wahrscheinlich einen falschen Wert besitzt. Sehr vorteilhaft ist auch, wenn bei der Kennfeldanpassung berücksichtigt wird, ob die ermittelten Korrekturwerte eine gemeinsame Tendenz aufweisen, und daß, falls dies der Fall ist, ein additiver und/oder multiplikativer Korrekturparameter ermittelt wird, der bei späteren Kennfeldzugriffen mit dem ausgelesenen Kennfeldwert verrechnet wird.

Dadurch werden Einflüsse, die das gesamte Kennfeld, oder größere Bereiche in gleicher Weise additiv oder multiplikativ verändern, erkannt und können schnell separat kompensiert werden. Dabei ist es auch vorteilhaft, wenn der additive Korrekturparameter nur aus Korrekturwerten ermittelt wird, die in Bereichen des Kennfeldes gebildet wurden, in denen die Kennfeldwerte eine bestimmte Obergrenze nicht überschreiten. In diesen Bereichen ist nämlich der additive Einfluß von Störungen sehr groß. Entsprechend ist es vorteilhaft, wenn der multiplikative Korrekturparameter nur aus Korrekturwerten ermittelt wird, die in Bereichen des Kennfeldes gebildet wurden, in denen die Kennfeldwerte eine bestimmte Untergrenze nicht unterschreiten. Es hat sich nämlich gezeigt, daß in diesen Bereichen der Einfluß multiplikativer Störungen sehr groß ist. Vorteilhafte Vorschriften für die Berechnung der additiven bzw. multiplikativen Korrekturparameter sind in Anspruch 31 bzw. 32 angegeben.

Zeichnung

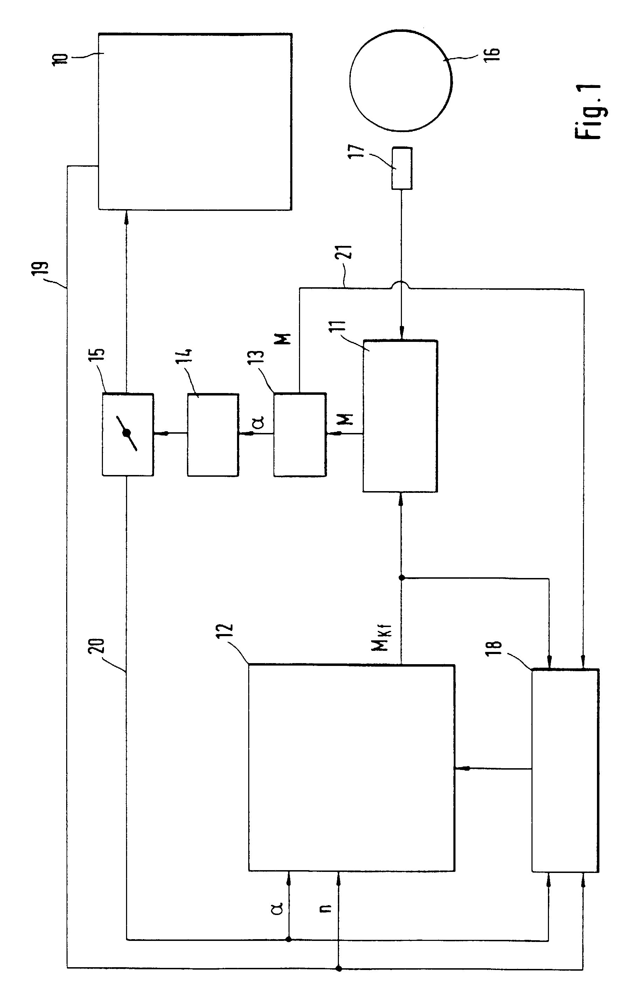

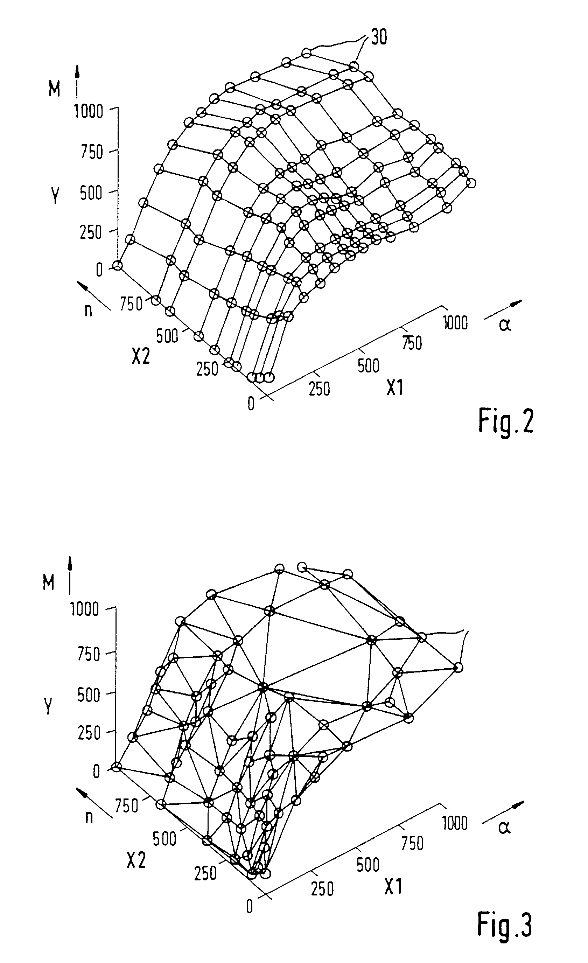

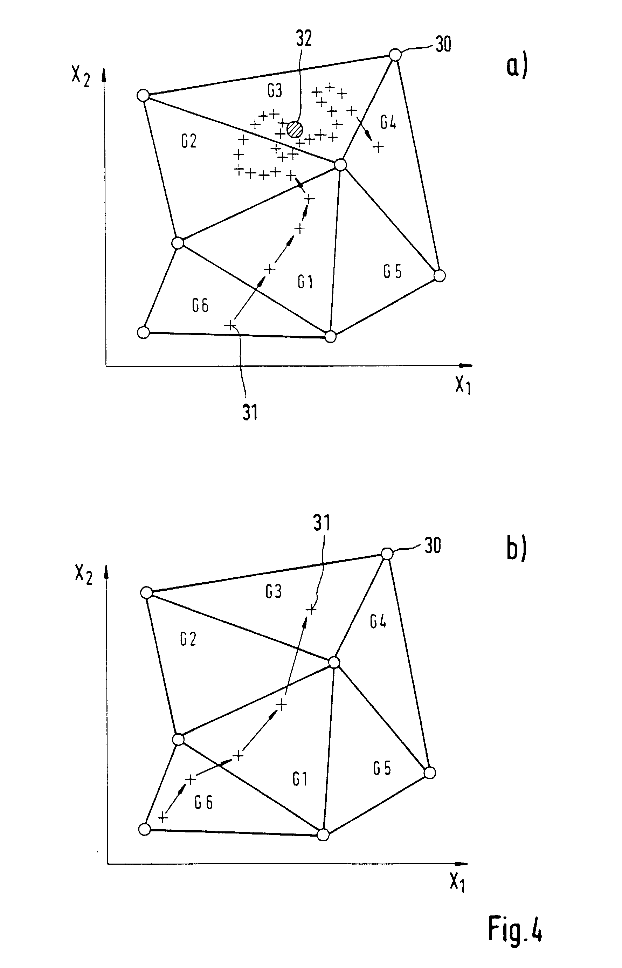

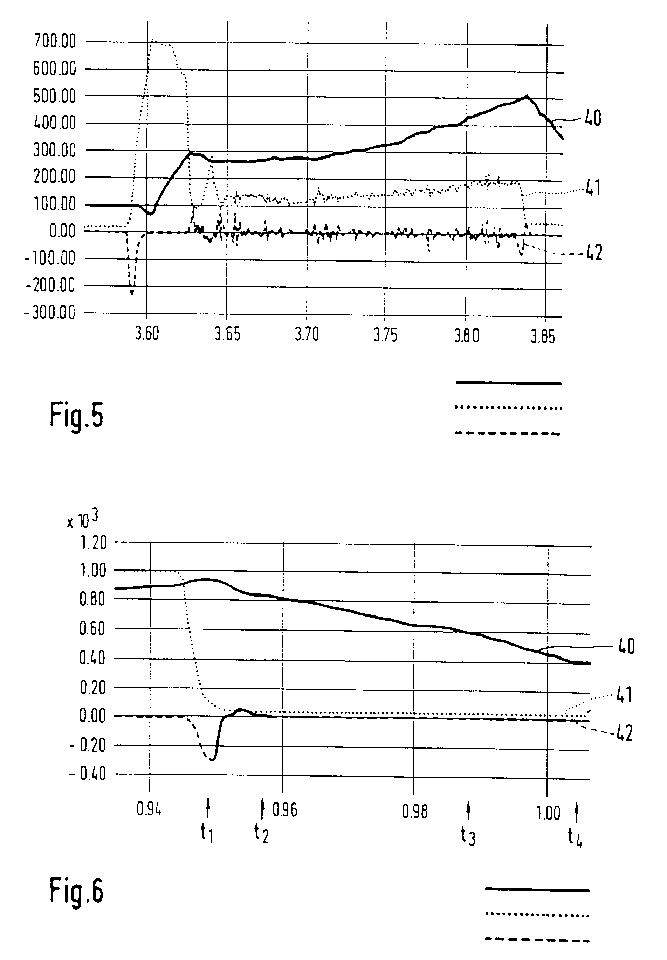

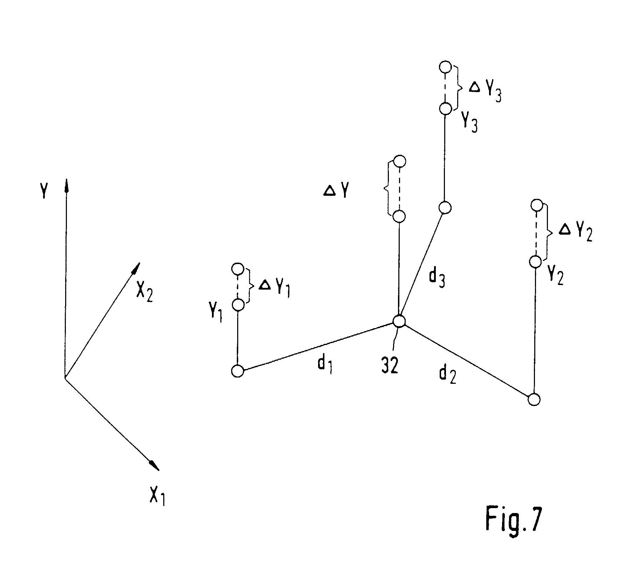

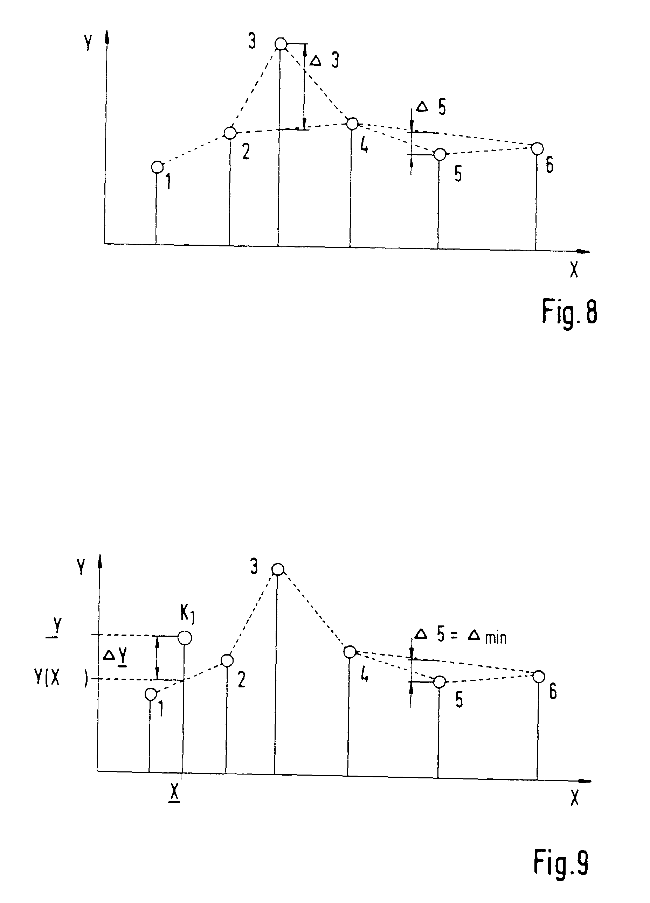

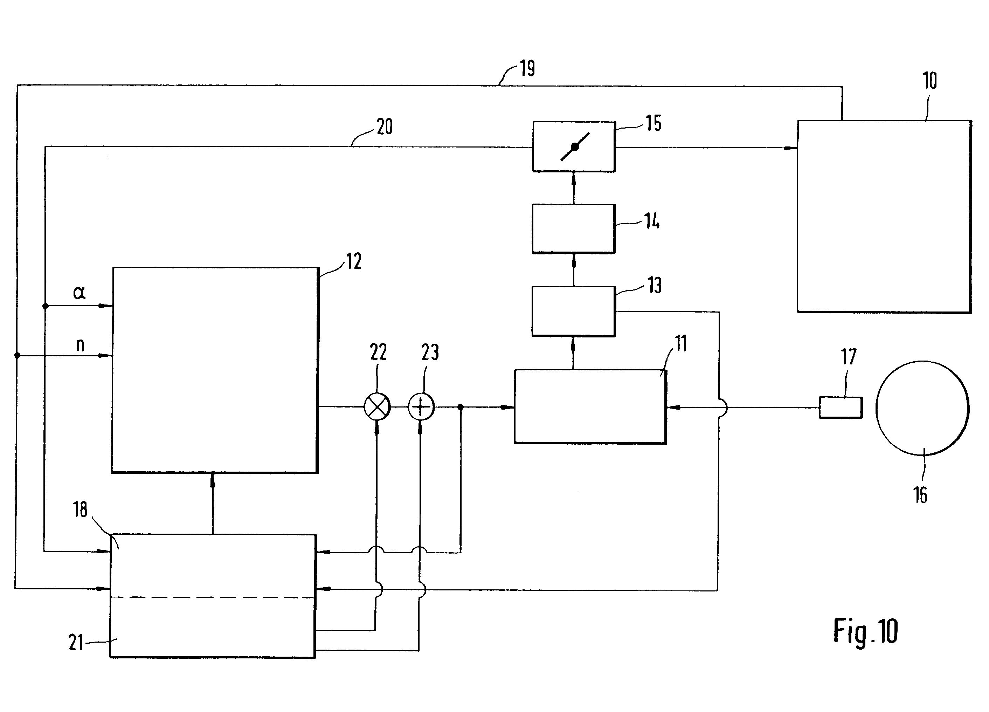

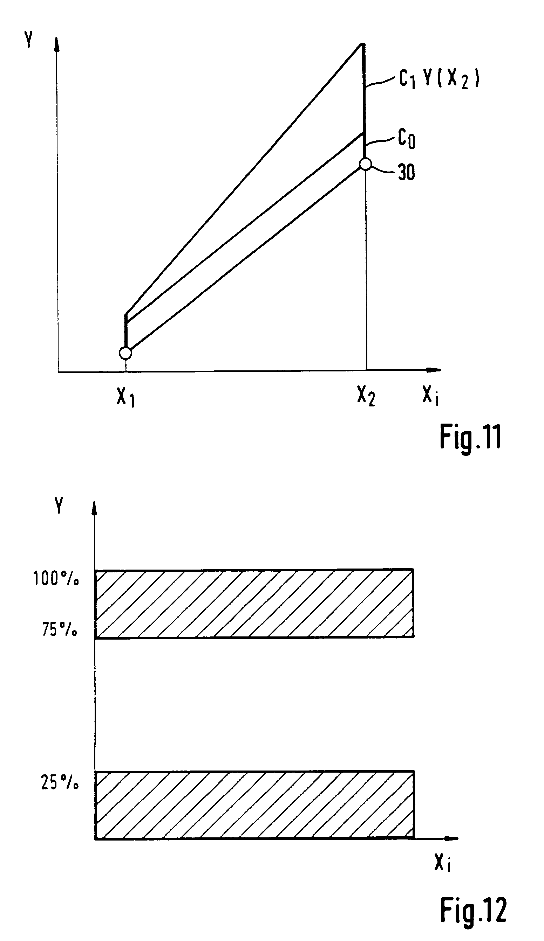

Zwei Ausführungsbeispiele der Erfindung sind in der Zeichnung dargestellt und in der nachfolgenden Beschreibung näher erläutert. Es zeigen Figur 1 eine Prinzipdarstellung eines Antriebsschlupfregelungssytems mit einer Kennfeld-Vorsteuerung; Figur 2 ein zweidimensionales Rasterkennfeld; Figur 3 das gleiche Kennfeld wie in Figur 2, jedoch als Assoziativ-Kennfeld dargestellt; Figur 4a die Darstellung des Arbeitspunktverlaufes in einer stationären Betriebsphase eines zu steuernden Prozesses; Figur 4b die Darstellung des Arbeitspunktverlaufes in einer dynamischen Betriebsphase des zu steuernden Prozesses; Figur 5 Meßsignale für die Drehzahl und die Drosselklappenstellung einer Brennkraftmaschine bei einer Testfahrt sowie die jeweils ermittelten Motormomentfehler für die gleiche Testfahrt; Figur 6 die Meßsignale für die Drehzahl und die Drosselklappenstellung einer Brennkraftmaschine bei einer Testfahrt sowie die dazu ermittelten Motormoment fehler in starker Vergrößerung; Figur 7 die Darstellung der Korrektur von Stützstellen eines Kennfeldes aufgrund eines ermittelten Korrekturwertes; Figur 8 die Darstellung, wie in einem einfachen Kennfeld die Stützstelle mit dem geringsten Informationsgehalt ermittelt werden kann; Figur 9 die Darstellung des Eintrages einer neuen Stützstelle in das einfache Kennfeld gemäß Figur 8; Figur 10 eine Prinzipdarstellung eines zweiten Ausführungsbeispiels für ein Antriebsschlupfregelungssytem; Figur 11 eine Darstellung der Auswirkungen von additiven und multiplikativen Änderungen auf unterschiedliche Kennfeldwerte, wobei die Beträge der Kennfeldwerte stark voneinander abweichen und Figur 12 eine schematische Darstellung für eine Einteilung der gespeicherten Funktionswerte in Bereiche, in denen die additive Korrekturgröße ermittelt wird und in Bereiche, in denen nur die multiplikative Korrekturgröße ermittelt wird.

Beschreibung der Erfindung

Die Erfindung wird am Beispiel einer Antriebsschlupf-Regelung für ein Kraftfahrzeug erläutert. In Figur 1 ist das Antriebsschlupf-Regelungssystem dargestelllt. Mit der Bezugszahl 10 ist die Brennkraftmaschine des Kraftfahrzeuges bezeichnet. Die Bezugszahl 11 bezeichnet den Antriebsschlupf-Regler (ASR). An diesen ist ein Motorsteuergerät 13 angeschlossen. Das Motorsteuergerät 13 steht weiterhin mit einer Motorleistungssteuerung 14 in Verbindung. Die Bezugszahl 15 bezeichnet die Drosselklappe der Brennkraftmaschine. An das ASR-Steuergerät 11 sind Raddrehzahlsensoren 17 angeschlossen. In der Zeichnung ist jedoch nur ein Raddrehzahlsensor 17 dargestellt. Mit der Bezugszahl 12 ist ein Motormoment-Kennfeld bezeichnet. Die Bezugszahl 18 bezeichnet schließlich ein Lernverfahren, durch das das Kennfeld 12 veränderten Betriebsbedingungen angepaßt werden kann.

Nachfolgend wird die Funktionsweise des Antriebsschlupf-Regelungssytems gemäß Figur 1 erläutert. Der Antriebsschlupf-Regler 11 überwacht während seines Betriebes die Raddrehzahlsensoren 17 daraufhin, ob bei einem Rad ggf. ein Schlupf vorliegt. Sollte bei einem der Räder zu großer Schlupf vorliegen, so könnte ein gefährlicher Fahrzustand eintreten, bei dem das Fahrzeug nicht mehr kontrollierbar ist. Aus diesem Grund soll der Antriebsschlupf-Regler 11 in einem solchen Fall nach Möglichkeit das Motormoment verringern, damit das Drehmoment an den Rädern kleiner wird und der Schlupf an dem Rad 16 nachläßt. Um dies zu erreichen, liest der Antriebsschlupf-Regler 11 aus dem Motormomentkennfeld 12 das aktuelle Motormoment aus. Hierzu wird als Eingangsinformation in das Kennfeld über die Leitung 20 der aktuelle Drosselklappenwinkel $\alpha$ zugeführt. Über die Leitung 19 wird die aktuelle Motordrehzahl n dem Motormomentkennfeld 12 als Eingangsinformation zugeführt. Die beiden Eingangsgrößen legen den Arbeitspunkt der Brennkraftmaschine fest. Aus dem Motormomentkennfeld 12 wird dann der zugehörige Motormomentwert $M_{Kf}$ ausgelesen und dem Antriebsschlupf-Regler 11 zugeführt. Aufgrund der beiden Eingangsinformationen aktuelles Motormoment $M_{Kf}$ sowie der Größe des Schlupfes des Rades 16 errechnet der Antriebsschlupf-Regler 11 einen Sollwert für das Motormoment $M_{Soll}$. Der Sollwert für das Motormoment $M_{Soll}$ wird dem Motorsteuergerät 13 zugeführt. Das Motorsteuergerät 13 errechnet daraus einen Sollwert für den Drosselklappenwinkel $\alpha_{Soll}$. Die Berechnung dieses Sollwertes kann ggf. wieder unter Zuhilfenahme eines Kennfeldes vonstatten gehen. Dieser Teil des Antriebsschlupf-Regelungssystems soll jedoch hier nicht näher betrachtet werden, so daß im folgenden darauf nicht näher eingegangen wird. Der Sollwert für den Drosselklappenwinkel u Soll wird schließlich dem Motorleistungssteuergerät 14 zur Verfügung gestellt. Dieses stellt dann den Drosselklappenwinkel der Drosselklappe 15 entsprechend der Vorgabe ein. Durch die Einstellung der Drosselklappe 15 verändert sich das Motormoment der Brennkraftmaschine 10. Liegt nach diesem Steuervorgang kein Schlupf bei einem der Räder mehr vor, so kann die Drosselklappe langsam wieder entsprechend der Vorgabe des Fahrers geöffnet werden, um dem Fahrerwunsch zu entsprechen. Liegt weiterhin ein Schlupf bei den Rädern vor, so muß die Drosselklappe 15 bei dem nächsten Steuerzyklus weiter geschlossen werden.

Das Motorsteuergerät 13 errechnet zusätzlich den tatsächlichen Istwert $M_{Ist}$ des aktuellen Motormomentes. Dieser Wert ergibt sich zusammen mit den vorliegenden Informationen über Motordrehzahl und Drosselklappenstellung aus der tatsächlich anliegenden Motorlast, die das Motorsteuergerät 13 ebenfalls durch Auswertung von Sensorsignalen ermittelt. Der Istwert des Motormomentes $M_{Ist}$ wird dem Lernverfahren 18 zugeführt. Es wird ebenfalls der aus dem Kennfeld ausgelesene aktuelle Motormomentwert $M_{Kf}$ und der aktuelle Drosselklappenwinkel a und die aktuelle Motordrehzahl n dem Lernverfahren 18 eingegeben. Aus der Differenz zwischen tatsächlichem Istwert des Motormomentes $M_{Ist}$ und dem aus dem Kennfeld ausgelesenen Wert für das Motormoment $M_{Kf}$ kann über das Lernverfahren 18 ein Korrekturwert für das Motormomentkennfeld 12 errechnet werden, so daß das Motormomentkennfeld veränderten Prozeßbedingungen angepaßt werden kann. Derartige veränderte Prozeßbedingungen haben ihre Ursache z.B. in Verschleißerscheinungen der Brennkraftmaschine sowie auch in Fertigungstoleranzen. Da es sich bei diesen Veränderungen bezogen auf die Zykluszeit der Steuerung um langsame Vorgänge handelt, wird das Lernverfahren 18 so ausgelegt, daß es nicht bei jedem Steuerungszyklus Korrekturwerte in das Kennfeld 12 einschreibt, sondern daß die Korrekturwerte über einen längeren Zeitraum gemittelt werden und erst der gemittelte Korrekturwert in das Kennfeld eingetragen wird. Dies ist auch deshalb wichtig, weil die zugeführten Eingangsgrößen wie der tatsächliche Istwert des Motormomentes $M_{Ist}$ mit Störungen behaftet sein können. Diese Störungen können erst bei längerer statistischer Beobachtung und Auswertung eliminiert werden. Aus diesem Grund ist es auch nicht sinnvoll, den von dem Motorsteuergerät 13 ermittelten Istwert des Motormomentes $M_{Ist}$ direkt als Eingangsgröße für den Antriebsschlupf-Regler 11 zu verwenden.

Die Figur 2 zeigt ein typisches Motormoment-Kennfeld. Dieses Kennfeld wird durch 120 Stützstellen 30 repräsentiert. Die Stützstellenverteilung des Kennfeldes entspricht dem eines typischen Rasterkennfeldes. Dabei ist der Eingangsraum des Kennfeldes (in diesem Fall aufgespannt durch die Drehzahlachsen und die Achse für den Drosselklappenwinkel $\alpha$) durch ein fest vorgegebenes Raster eingeteilt. In den Knotenpunkten des Rasters sind dann jeweils die Stützstellen positioniert.

Derartige Rasterkennfelder werden jedoch bei der vorliegenden Erfindung nicht verwendet. Stattdessen wird ein sogenanntes Assoziativ-Kennfeld verwendet. Ein Beispiel für ein solches Kennfeld ist in Figur 3 dargestellt. In Figur 3 soll durch die dort vorhandenen Stützstellen das gleiche Kennfeld repräsentiert werden, wie auch in Figur 2 gezeigt. Im Unterschied zu dem Rasterkennfeld gemäß Figur 2 sind die Stützstellen bei dem Assoziativ-Kennfeld nach Figur 3 beliebig im Eingangsraum des Kennfeldes verteilt. Um das Kennfeld mit der gleichen Genauigkeit nachzubilden, wie bei dem Kennfeld in Figur 2 braucht man für das Assoziativ-Kennfeld nur 64 Stützstellen. Dies ist darin begründet, daß man die Stützstellendichte in den Bereichen hoher Kennfelddynamik sehr hoch wählen kann, während die Stützstellendichte in den Kennfeldbereichen nur geringer Kennfelddynamik sehr niedrig gewählt werden kann. Die wesentlichen Merkmale des Assoziativ-Kennfeldes sowie insbesondere mögliche Zugriffsmechanismen zu den Stützstellen des Assoziativ-Kennfeldes sind in dem Bericht M. Schmitt, H. Tolle "Das Assoziativ-Kennfeld - Eine lernfähige Standardkomponente für Automobil-Steuergeräte", Automobiltechnische Zeitschrift 96 (1994), Seiten 28 bis 32 und in der noch nicht veröffentlichten deutschen Patentanmeldung P 43 04 441.7 beschrieben. Deshalb wird nachfolgend auf diese Aspekte nicht näher eingegangen. Nachfolgend wird das Lernverfahren 18 näher erläutert. Für das Lernverfahren ist es wichtig, eine schnelle, detaillierte und sichere Adaption zwei- oder mehrdimensionaler Kennfelder zu ermöglichen. Dabei sollen die Abweichungen des Kennfeldes zu einem veränderten Sollfunktionsverlauf in einem möglichst kurzen Trainingszyklus kompensiert werden, auch wenn das Kennfeld nur unvollständig mit Trainingswerten überdeckt wird.

Die Festlegung der Lernzeitpunkte sollte in möglichsten großen Intervallen erfolgen, um die Rechenzeitbelastung gering zu halten und Störungen unterdrücken zu können.

In Figur 4a ist der Eingangsraum eines einfachen Assoziativ-Kennfeldes dargestellt. Das dortige Kennfeld wird durch sieben Stützstellen 30 repräsentiert. Die Stützstellen sind durch Linien so miteinander verbunden, daß die abgetrennten Bereiche G1 bis G6 entstehen. Jeder Bereich wird somit durch drei Stützstellen 30 gebildet. Die drei Stützstellen jedes Bereiches stellen gleichzeitig die Interpolationsstützstellengruppe für den Bereich dar. Dies bedeutet, daß, wenn der Arbeitspunkt sich innerhalb des Bereiches aufhält, zur Ermittlung des Kennfeldwertes an der Position des Arbeitspunktes die drei Stützstellen des Bereiches, in dem sich der Arbeitspunkt aufhält, zur Interpolation des Kennfeldwertes herangezogen werden. Ein möglicher Verlauf des Arbeitspunktes während einer Betriebsphase des Prozesses, bei dem auf das Kennfeld gemäß Figur 4a zugegriffen wird, ist in Figur 4a ebenfalls eingetragen. Der dargestellte Arbeitspunktverlauf entspricht dem einer stationären Betriebsphase. Dies ist daran zu erkennen, daß bei den Kennfeldzugriffen der Arbeitspunkt 31 sich sehr häufig im Bereich der Gebiete G2 und G3 aufhält. Demgegenüber ist in Figur 4b ein typischer Arbeitspunktverlauf für eine dynamische Betriebsphase dargestellt. Hierbei wandert der Arbeitspunkt 31 sehr schnell durch eine größere Anzahl von Gebieten. Erfindungsgemäß wird eine Anpassung des Kennfeldes nur für stationäre Betriebszustände vorgenommen. Nur dann repräsentieren die Korrekturdatensätze nämlich das im Kennfeld nachzubildende Prozeßverhalten. Da sich eine Stationärphase dadurch auszeichnet, daß eine größere Zahl von Kennfeldzugriffen bei dicht beieinanderliegenden Arbeitspunkten erfolgt, wird als Kriterium, ob eine stationäre Betriebsphase vorliegt oder nicht verwendet, ob ausreichend viele Kennfeldzugriffe innerhalb eines begrenzten Bereiches des Kennfeldes stattgefunden haben oder nicht. Als begrenzter Kennfeldbereich wird dabei der durch die Interpolationsstützstellengruppe gebildete Bereich G1 bis G6 gewählt. Da innerhalb einer stationären Phase Schwankungen des Arbeitspunktes 31 um die Grenze zweier Stützstellengruppen auftreten können, wird erfindungsgemäß die stationäre Betriebsphase auch daran erkannt, daß ausreichend viele Kennfeldzugriffe innerhalb zweier benachbarter Bereiche G1 bis G6 stattgefunden haben. Als Nachbarschaftsrelation für Interpolationsstützstellengruppen wird dabei definiert:

zwei Interpolationsstützstellengruppen gelten als benachbart, wenn sie sich nur in einer Stützstelle unterscheiden.

Als Lernzeitpunkt von Kennfeldanpassungen wird das Ende einer stationären Betriebsphase gewählt. Dieser Zeitpunkt wird daran erkannt, daß der Arbeitspunkt nach einer Mindestanzahl von Kennfeldzugriffen innerhalb eines begrenzten Kennfeldbereiches diesen Bereich verläßt. Alle während der Stationärphase aufgetretenen Korrekturwerte werden dann zu einem die gesamte Stationärphase repräsentierenden Korrekturwert zusammengefaßt. Das Ende der stationären Betriebsphase wird bei dem Beispiel in Figur 4a daran erkannt, daß der Arbeitspunkt nach einer Anzahl von 26 Kennfeldzugriffen innerhalb der Bereiche G2 und G3 in den Bereich G4 wandert. Die bei jedem Kennfeldzugriff innerhalb der Bereiche G2 und G3 ermittelten Korrekturdaten werden dann gemittelt bzw. gefiltert und zu einem Korrekturdatum zusammengefaßt. Dabei werden nicht nur die einzelnen Korrekturwerte gemittelt bzw. gefiltert, sondern auch die einzelnen Positionen der Kennfeldzugriffe gemittelt bzw. gefiltert. Es wird auf diese Art und Weise ein repräsentativer Korrekturwert berechnet. Die Position dieses Korrekturwertes ist in Figur 4a mit der Bezugszahl 32 angegeben. Der ermittelte Korrekturwert wird an der angegebenen Position in das Assoziativ-Kennfeld eingetragen. Hierauf wird nachfolgend noch genauer eingegangen.

Wenn der Arbeitspunkt sehr schnell durch die Bereiche G1 bis G6 wandert, werden die in jedem Bereich ermittelten Korrekturdaten nachdem der Arbeitspunkt diesen Bereich verlassen hat, verworfen.

Beim realen Betrieb eines Systems im Kraftfahrzeug, wie z.B. dem Antriebsschlupf-Regelungssystems muß mit gestörten Meßsignalen gerechnet werden. Sowohl die gemessene Arbeitspunktposition 31 als auch die berechneten Korrekturdaten werden mit statistischen und in einigen Betriebszuständen sogar auch systematischen Fehlern behaftet sein. Aus diesem Grund wird bei dem erfindungsgemäßen Verfahren eine Filterung der ermittelten Einzelkorrekturwerte vorgenommen. Durch die Filterung sollen stochastische Störungen kompensiert werden, es sollen weiterhin systematische Störungen, die z.B. beim Übergang von einer dynamischen in eine stationäre Betriebsphase auftreten, kompensiert werden. Darüber hinaus sollen möglichst viele in einer stationären Phase aufgetretene Korrekturdatensätze für den Lernvorgang verwendet werden. Das Filter wird vorzugsweise als digitales Filter ausgeführt. Da das Filter bei jedem Kennfeldzugriff aufgerufen wird, ist hier auf möglichst geringen Rechenaufwand zu achten. Deshalb wird hierfür eine Mittelwertbildung oder eine Tiefpaßfilterung der Korrekturwerte durchgeführt. Um stochastische Störungen unterdrücken zu können, muß dabei sichergestellt sein, daß die Stationärphase eine ausreichende Länge besitzt, damit positive und negative Störanteile sich gegenseitig kompensieren. Bei der Mittelwertbildung werden alle Einzelkorrekturwerte gleich stark gewichtet. Bei der Tiefpaßfilterung wird dagegen eine bessere Störunterdrückung bei nur kurzen stationären Phasen erreicht. Zur Unterdrückung systematischer Verfälschungen, z.B. durch Nachwirken des Dynamikbetriebes (Prozeßdynamik) am Anfang von Stationärphasen werden beim Eintritt in eine Stationärphase einige Korrekturwerte ignoriert. Die Anzahl dieser Werte muß anwendungsabhängig festgelegt werden.

In Figur 5 sind mit Störungen behaftete Meßkurven, die bei einer Testfahrt eines Kraftfahrzeuges aufgenommen wurden, dargestellt. Mit der Bezugszahl 40 ist der Verlauf der Motordrehzahl während der Testfahrt bezeichnet. Die Kurve 41 stellt den Verlauf der Stellung der Drosselklappe während der Testfahrt dar. Die Kurve 42 gibt den Fehler des Drehmomentverlaufes der Brennkraftmaschine an. Dieser wurde aus der Differenz der beiden vom Antriebsschlupf-Regelungssystem ermittelten Größen $M_{Kf}$ und $M_{Ist}$ berechnet. In Figur 5 ist bei den Kurven 41 und 42 deutlich zu sehen, daß diese noch mit Störungen überlagert sind. In Figur 6 sind ebenfalls Meßkurven wie in Figur 5 dargestellt. Der dargestellte Teil betrifft jedoch nur einen kleinen Ausschnitt aus einer ähnlichen Testfahrt wie in Figur 5. Der dargestellte Verlauf der Drosseklappe macht deutlich, daß die Drosselklappe von einem geöffneten Zustand plötzlich in einen geschlossenen Zustand übergeführt wird und dann für den Rest der Zeit in diesem Zustand verharrt. Die stationäre Betriebsphase beginnt etwa im Zeitpunkt tl und endet etwa im Zeitpunkt t4. Der Zeitpunkt t3 stellt einen potentiellen Lernzeitpunkt dar. Der Zeitpunkt t2 stellt das Ende des Einflusses der Dynamiknachwirkung auf die stationäre Betriebsphase dar. In der Zeit zwischen den Zeitpunkten t1 und t2 liegen nämlich noch heftige Drehmomentfehler vor, die aber nicht auf Fehlanpassungen des Kennfeldes zurückzuführen sind.

In Figur 7 ist eine erste Möglichkeit für die Eintragung einer Korrektur in das Kennfeld dargestellt. Mit der Bezugszahl 32 ist wiederum die Position eines repräsentativen Korrekturdatums innerhalb des Eingangsraums des Kennfeldes bezeichnet. $\Delta Y_{ges}$ bezeichnet den Wert der ermittelten Korrekturgröße für das repräsentative Korrekturdatum. Mit $Y_1$, $Y_2$ und $Y_3$ sind die Interpolationsstützstellen der Interpolationsstützstellengruppe für das errechnete Korrekturdatum

bezeichnet. $d_1$, $d_2$ und $d_3$ bezeichnen die Abstände zwischen der Position des Korrekturdatums im Eingangsraum des Kennfeldes und den Positionen der Stützstellen im Eingangsraum des Kennfeldes respektive. $\Delta Y_1$, $\Delta Y_2$ und $\Delta Y_3$ bezeichnen die einzelnen Korrekturgrößen für die jeweiligen Stützstellen. Wenn die entsprechenden Stützstellen um diese Korrekturgrößen korrigiert werden, würde eine Interpolation an der Position 32 des ermittelten Korrekturdatums als Interpolationswert den um $\Delta Y_{ges}$ vergrößerten Wert des Kennfeldes an dieser Position ergeben. Es besteht nun jedoch das Problem für die Anpassung des Kennfeldes, daß die einzelnen Korrekturwerte für die Stützstellen $\Delta Y_1$, $\Delta Y_2$ und $\Delta Y_3$ ermittelt werden müssen und zwar in Abhängigkeit von der ermittelten Korrekturgröße $\Delta Y_{ges}$ und den Abständen $d_j$ den Stützstellen zur Gesamtkorrektur $\Delta Y_{ges}$, da das Verhältnis der Stützstellenkorrekturen umgekehrt proportional zum Verhältnis dieser Abstände gewählt werden soll. Zur Bestimmung dieser Einzelkorrekturen für die Stützstellen wird die inverse Interpolationsvorschrift verwendet.

Dadurch ist gewährleistet, daß das Kennfeld nach der Korrektur an dieser Stelle exakt den Korrekturwert repräsentiert. Die Vorschrift zur Bestimmung der Stützstellenkorrekturen $\Delta Y_i$ aus der Gesamtkorrektur $\Delta Y_{ges}$ und den Abständen $d_j$ der Stützstellen zum Korrekturwert lautet:

$$\Delta y_i = \gamma \delta \omega_i \Delta y_{ges}, \qquad i = 1,...,n+1$$

mit

$$w_i = \prod_{j=1,j\neq i}^{n+1} d_j \qquad \text{und} \qquad \delta = \frac{\sum_{i=1}^{n+1} w_i}{\sum_{i=1}^{n+1} w_i^2}$$

wobei n die Dimension des Eingangsraums des Kennfeldes ist.

Die Korrektur kann über den "Lernfaktor" y abgeschwächt werden, um ein gedämpftes Anpassungsverhalten zu erzielen.

Falls in einem Kennfeldbereich zu große Abweichungen auftreten, die durch Korrektur der Stützstellen-Funktionswerte vorhandener Stützstellen nicht mehr gut kompensierbar sind, kann die Stützstellendichte in diesem Bereich erhöht werden, indem die Interpolationsstützstellen nach folgender Vorschrift in Richtung des Korrekturwertes verschoben werden:
if

$$\Delta Y_{ges} > minkor$$

$$\Delta_{x_i} = inc \cdot sign(\underline{d}_i)$$

Hierbei ist minkor die minimale Korrekturschwelle unterhalb der keine Korrektur der Positionen der Stützstellen ausgeführt wird. inc ist die vom Anwender z.B. zwischen einem und drei Inkrementen festzulegende Korrekturstärke und durch sign ($\underline{d}_i$) wird die Korrekturrichtung (das Vorzeichen) in jeder Koordinatenrichtung festgelegt. Das bis jetzt beschriebene Verfahren eignet sich besonders für zeitkritische Anwendungen, bei denen der Adreßraum nur unvollständig durch stationäre Arbeitspunktphasen überdeckt wird oder bei dem bestimmte Gebiete nur selten angefahren werden, bei denen aber gleichzeitig nur begrenzte Strukturänderungen zu erwarten sind.

Bei einer weiteren Erweiterung des Lernverfahrens 18 ist auch eine Hinzufügung von neuen Stützstellen in das Kennfeld zur Kennfeldanpassung möglich. Um jedoch den für das Kennfeld reservierten Speicherbereich möglichst immer vollständig auszunutzen und auch zur Erhaltung der Adaptionsfähigkeit des Kennfeldes nach längerem Training, wird vor einem Neueintrag eine andere Stützstelle gelöscht. Hierzu wird die Stützstelle mit dem minimalen Informationsgehalt $\Delta_{min}$ ausgewählt. Der Informationsgehalt einer Stützstelle wird dabei wie folgt definiert:
Der Absolutwert des Fehlers, der beim Weglassen einer Stützstelle und Interpolation an deren Position entsteht, ist ein Maß für den Informationsgehalt dieser Stützstelle.

Die Bestimmung der Stützstelle mit dem minimalen Informationsgehalt ist in Figur 8 dargestellt. In dem dort dargestellten Beispiel weist die Stützstelle 5 den minimalen Informationsgehalt auf. Der Eintrag der neuen Stützstelle an der Position $\underline{X}_{neu}$ ist in Figur 9 dargestellt.

Die gelöschte Stützstelle wird dann im Speicher des entsprechenden Steuergerätes durch den neuen Wert $Y_{neu}$

überschrieben, falls die Abweichung zu dem aus dem Kennfeld an dieser Stelle interpolierten Wert

$$Y(\underline{X}_{neu}) > \Delta_{min}$$

ist.

$$\left| Y_{neu} - Y(\underline{X}_{neu}) \right| > \Delta_{min}$$

Falls der Korrekturwert $(\underline{X}_{neu}, \underline{Y}_{neu})$ in unmittelbarer Nähe einer breits vorhandenen Stützstelle $(X_{alt}, Y_{alt})$ auftritt, wird keine neue Stützstelle eingetragen, sondern die vorhandene alte Stützstelle nach der Vorschrift

$$x_i^{adapt} = \beta \, x_i^{alt} + (1 - \beta) \, x_i^{neu} \text{ mit } i = 1,\dots,n;\ 0 \leq \beta \leq 1$$

$$y_{adapt} = \beta y_{alt} + (1 - \beta) y_{neu}$$

korrigiert. Durch den Vergessensfaktor $\beta$ wird festgelegt, wie stark die neue Korrektur die alte Stützstelle verändern soll.

Auch wenn sich die lokale Kennfeldsteigung durch Eintragung des Korrekturwertes als neue Stützstelle sehr stark ändern würde, d.h. wenn das Verhältnis von Korrekturhöhe $\underline{\Delta Y}_{neu}$ zum Abstand zur nächstgelegenen Stützstelle $d_{min}$ einen vorgegebenen Wert übersteigt, wird die nächstgelegene Stützstelle korrigiert, weil sie wahrscheinlich einen falschen Wert besitzt. Durch das Eintragen neuer Stützstellen und der damit verbundenen Löschung alter Stützstellen ist eine gute Anpassung auch bei starken Änderungen der Kennfeldstruktur möglich, vorausgesetzt das Kennfeld wird ausreichend durch Stationärphasen überdeckt.

Bei besonders kritischen Anwendungen, bei denen ausgeprägte Lücken in der Arbeitspunktüberdeckung bestehen und gleichzeitig starke Strukturänderungen auftreten, die eine drastische Veränderung der Stützstellendichte in den betroffenen Bereichen erforderlich machen, kann auch eine Kombination der erwähnten Lernverfahren (Korrektur vorhandener Stützstellen, Verschiebung vorhandener Stützstellen, Hinzufügung neuer Stützstellen verbunden mit Löschung alter Stützstellen) verwendet werden. Wenn der mittlere Fehler am Arbeitspunkt auch nach längerem Training noch relativ groß ist, d.h. wenn die Zahl der eingetragenen Korrekturen eine vorgegebene Schwelle kleiner oder gleich der Anzahl n der insgesamt gespeicherten Stützstellen erreicht und der Fehler trotzdem einen vorgegebenen Grenzwert überschreitet, wird davon ausgegangen, daß durch die Korrektur bestehender Stützstellen, in Bereichen starker Strukturveränderung keine ausreichend hohe Zahl von Stützstellen konzentriert werden konnte. In diesem Fall wird auf ein kombiniertes Verfahren übergegangen, bei dem eine neue Stützstelle eingetragen wird, wenn der einzutragende Korrekturwert um mehr als eine vorgebbare Maximaldistanz (z.B. 10% des normierten Wertebereiches der Kennfeldadressen) von der nächstgelegenen Stützstelle entfernt liegt. Dieses kombinierte Verfahren ist dann sinnvoll, wenn nur sporadisch starke Strukturänderungen auftreten. Wenn bei dem Verfahren, bei dem neue Stützstellen in das Kennfeld eingetragen werden und alte jeweils gelöscht werden, nach längerem Training noch große Fehler auftreten, konnte das Kennfeld aufgrund der unvollständigen Arbeitspunktüberdeckung und dem Eintragen konzentrierter Korrekturwerte in einigen Bereichen vermutlich nicht aktualisiert werden. In diesem Fall sollte auf das vorher erklärte Verfahren mit der Korrektur vorhandener Stützstellen umgeschaltet werden, um durch Korrekturwertextrapolation und Verteilung auf mehrere umliegende Stützstellen einen größeren Kennfeldbereich abzudecken und so entstandene Wissenslücken zu schließen. Dieses kombinierte Verfahren ist dann sinnvoll, wenn ständig starke Strukturänderungen auftreten. Sobald der mittlere Fehler am Arbeitspunkt für eine gewisse Dauer unterhalb der vorgegebenen Fehlerschwelle bleibt, kann auf die ursprüngliche Adaptionsstrategie zurückgeschaltet werden.

In Figur 10 ist eine leicht modifizierte Anordnung für ein ASR-Regelungssystem dargestellt. Dabei bezeichnen die gleichen Bezugszahlen wie in Figur 1 die gleichen Komponenten und werden hier nicht nochmal neu aufgeführt. Zusätzlich zu dem Lernverfahren 18 ist noch eine Tendenzerkennung 21 vorgesehen. Die Tendenzerkennung 21 arbeitet eng mit dem Lernverfahren 18 zusammen. Falls die bei jedem Kennfeldzugriff ermittelten Korrekturwerte eine gemeinsame Tendenz aufweisen, d.h. nicht mittelwertfrei sind, wird der gleichförmig additiv und der multiplikativ wirkende Anteil durch die Tendenzerkennung 21 extrahiert. Der so ermittelte additive Korrekturparameter $C_0$ und der multiplikative Parameter $C_1$ werden beim Kennfeldzugriff nach der Vorschrift $Y' = C_1 \cdot Y(X) + C_0$ mit dem Kennfeldausgangswert $Y(X)$ verrechnet.

Um additive von multiplikativen Einflüssen zu separarieren, kann in einer einfachen, rechenzeitgünstigen Weise der additive Korrekturparameter nur in Kennfeldbereichen kleiner Funktionswerte ermittelt werden, weil sich hier eine additive Verschiebung besonders stark auswirkt. Der multiplikative Korrekturparameter wird entsprechend nur in Bereichen großer Funktionswerte ermittelt. Der Einfluß von additiven Korrekturparametern und multiplikativen Korrekturparametern ist in der Figur 11 näher dargestellt. Figur 12 zeigt dann zwei ausgewählte schraffierte Funktionswertbereiche. Die Bereiche des Kennfeldes, in denen die Funktionswerte zwischen 0 und 25 % des höchsten Kennfeldwertes liegen, werden für die Extrahierung des additiven Korrekturparameters verwendet. Die Bereiche, in denen die Funktionswerte zwischen 75 % und 100 % des höchsten Funktionswertes des Kennfeldes liegen, werden für die Extrahierung des mulitplikativen Korrekturparameters verwendet. Die Adaptionsvorschriften für die Korrekturparameter lauten:

$$c_0(k) = c_0(k\text{-}1) + q0_{add}\Delta Y(k) + q1_{add}\Delta Y(k\text{-}1)$$

$$c_1(k) = c_1(k\text{-}1) + q0_{mult}\Delta Y(k) + q1_{mult}\Delta Y(k\text{-}1).$$

Dabei sind die Konstanten $q0_{add}$, $q1_{add}$ und $q0_{mult}$ und $q1_{mult}$ Reglerparameter eines Proportional-Integral-Regelalgorithmus. Die Paramter müssen vorgewählt werden. $\Delta Y(k\text{-}1)$ gibt die Abweichung zwischen Sollwertfunktionsverlauf und Kennfeldwert bei einem Kennfeldzugriff k-1 an; $\Delta Y(k)$ entsprechend die Abweichung bei dem nachfolgenden Kennfeldzugriff k. Die Korrekturparameter $c_0$ und $c_1$ der Korrekturvorschrift $Y' = C_1 Y_{(x)} + C_0$ können aber auch auf andere Weise, z.B. durch eine Regressionsrechnung über mehrere Korrekturwerte $Y_{(x)i}$ oder ein anderes Parameterschätzverfahren berechnet werden. Die Korrekturparameter sollten nach dem Einschalten des Steuervorgangs jeweils neu adaptiert werden. Darüber hinaus können die Parameter auch parallel zur strukturellen Adaption des Kennfeldes ständig aktualisiert werden.

Hierzu kann das Strukturlernen gelegentlich unterbrochen und eine Nachadaption der globalen Korrekturparameter vorgenommen werden. Bei Anwendungen, bei denen auch während des Betriebes mit einer deutlichen Änderung global wirksamer Einflüsse gerechnet werden muß, sollten die globalen Korrekturparameter statt dessen parallel mit angepaßt werden, indem ein kleiner Teil (z.B. 5 %) jeder Stützstellenkorrektur zur Adaption der globalen Kennfeldkorrekturen verwendet wird.

Die vorliegende Erfindung ist nicht auf das hier beschriebene Ausführungsbeispiel beschränkt. Es kann immer dann verwendet werden, wenn zur Steuerung oder Modellierung eines Prozesses Kennfelder verwendet werden. Dies ist z.B. bei der Einspritzungs-Steuerung und auch bei der Zündungs-Steuerung einer Brennkraftmaschine der Fall. Weitere Anwendungen ergeben sich aber auch z.B. bei der Getriebesteuerung.

Eine Variation des hier beschriebenen Verfahrens besteht noch darin, daß nicht das eigentliche Kennfeld, das zur Steuerung des Prozesses ausgelesen wird, adaptiert wird, sondern daß zusätzlich ein Korrekturkennfeld vorgesehen wird, in das die Korrekturwerte für das eigentliche Kennfeld (Grundkennfeld) eingetragen werden. Das Grundkennfeld bleibt dann immer noch erhalten und es kann, wenn gewünscht, später auf das Grundkennfeld zurückgeschaltet werden, z.B. nachdem eine bestimmte Sensorkomponente ausgetauscht wurde (Notlauf). Das Grundkennfeld kann dabei als fein unterteiltes Rasterkennfeld ausgeführt sein, während das Korrekturkennfeld als Assoziativkennfeld mit nur geringer Stützstellenzahl ausgebildet ist.

**Patentansprüche**

1. Verfahren zur Steuerung/Regelung von Prozessen in einem Kraftfahrzeug, insbesondere Verbrennungsvorgänge, Getriebeschaltvorgänge oder Bremsvorgänge, mit einem in einem Steuergerät angeordneten Kennfeld, wobei das Kennfeld durch Betriebsgrößen des jeweiligen Prozesses aufgespannt wird und durch eine Anzahl von Stützstellen repräsentiert wird, wobei für jede Stützstelle eine Information über den Wert des Kennfeldes an der Position der Stützstelle vorgesehen wird, wobei für einen ermittelten Arbeitspunkt des Prozesses mindestens ein für diesen Arbeitspunkt maßgebender Kennfeldwert aus dem Kennfeld ermittelt wird unter dessen Berücksichtigung mindestens eine Steuer- oder Modellgröße für die Abgabe eines Steuer- oder Modellierungssignals gebildet wird, wobei das Kennfeld an ein verändertes Prozeßverhalten automatisch angepaßt wird, wobei bei der Anpassung ein Korrekturwert für eine bestimmte Betriebsphase des Prozesses ermittelt wird, wobei eine Anzahl von um den ermittelten Korrekturwert umliegenden Stützstellen (30) des Kennfeldes für die Anpassung ausgewählt wird wobei für jede ausgewählte Stützstelle ein Korrekturwert ($\Delta y_i$) in Abhängigkeit von dem ermittelten Korrekturwert ($\Delta Y_{ges}$) berechnet wird und
   dadurch gekennzeichnet,

   - daß im Steuergerät für jede Stützstelle (30) zusätzlich eine Information über die Position der Stützstelle (30) innerhalb des Kennfeldes vorgesehen wird, so daß die Stützstellen (30) unabhängig von einem festen Raster an beliebiger Stelle des Eingangsraumes des Kennfeldes plazierbar sind,

- daß die Position (32) des Korrekturwertes ($\Delta Y_{ges}$) derart berücksichtigt wird, daß die ausgewählten Stützstellen (30) umgekehrt proportional in bezug auf die Position (32) des ermittelten Korrekturwertes ($\Delta Y_{ges}$) innerhalb des Kennfeldes angepaßt werden.

entsprechend der vorgenommenen Interpolation zur Bestimmung des zuvor ermittelten Kennfeldwertes.

2. Verfahren nach Anspruch 1, dadurch gekennzeichnet, daß für die Kennfeldanpassung diejenigen Stützstellen (30) ausgewählt werden, die auch zur Interpolation eines Kennfeldwertes an der Position des ermittelten Korrekturwertes (32) verwendet werden würden.

3. Verfahren nach Anspruch 2, dadurch gekennzeichnet, daß zur Interpolation eines Kennfeldwertes an der Position des Arbeitspunktes (31) eine bestimmte Anzahl der zu dem Arbeitspunkt (31) nächstbenachbarten und möglichst gleichmäßig um den Arbeitspunkt (31) verteilten Stützstellen (30) herangezogen werden.

4. Verfahren nach Anspruch 3, dadurch gekennzeichnet, daß die bestimmte Anzahl der Dimension des Kennfeldes, d.h. der um 1 erhöhten Anzahl der Betriebsgrößen, die das Kennfeld aufspannen, entspricht und daß durch die bestimmte Anzahl der nächstbenachbarten Stützstellen (30) eine Interpolationsstützstellengruppe gebildet wird.

5. Verfahren nach einem der vorhergehenden Ansprüche, dadurch gekennzeichnet, daß die Kennfeldanpassung nur in einer stationären Betriebsphase durchgeführt wird.

6. Verfahren nach Anspruch 5, dadurch gekennzeichnet, daß die stationäre Betriebsphase daran erkannt wird, daß der Arbeitspunkt (31) für eine bestimmte Mindestanzahl von Kennfeldzugriffen innerhalb eines begrenzten Bereiches (G1 bis G6) des Kennfeldes verharrt.

7. Verfahren nach Anspruch 6, dadurch gekennzeichnet, daß der begrenzte Bereich (G1 bis G6) durch die Interpolationsstützstellengruppe des jeweiligen Arbeitspunktes (31) gebildet wird.

8. Verfahren nach Anspruch 5, dadurch gekennzeichnet, daß die stationäre Betriebsphase auch daran erkannt wird, daß der Arbeitspunkt (31) sich in zwei benachbarten begrenzten Bereichen (G1 bis G6) für eine bestimmte Mindestanzahl von Kennfeldzugriffen aufhält.

9. Verfahren nach einem der Ansprüche 5 bis 8, dadurch gekennzeichnet, daß die Kennfeldanpassung am Ende der stationären Betriebsphase durchgeführt wird.

10. Verfahren nach Anspruch 9, dadurch gekennzeichnet, daß das Ende der stationären Betriebsphase daran erkannt wird, daß der Arbeitspunkt (31) nach der Mindestanzahl von Kennfeldzugriffen innerhalb des begrenzten Bereiches (G1 bis G6) diesen Bereich verläßt.

11. Verfahren nach Anspruch 9, dadurch gekennzeichnet, daß das Ende der stationären Betriebsphase auch daran erkannt wird, daß der Arbeitspunkt nach der Mindestanzahl von Kennfeldzugriffen innerhalb der zwei benachbarten begrenzten Bereiche (G1 bis G6) diese Bereiche verläßt.

12. Verfahren nach einem der vorhergehenden Ansprüche, dadurch gekennzeichnet, daß mehrmals während einer stationären Betriebsphase, insbesondere bei jedem Kennfeldzugriff, Korrekturwerte für das Kennfeld errechnet werden, daß die während der stationären Betriebsphase ermittelten Korrekturwerte zu einem einzigen repräsentativen Korrekturwert zusammengefaßt werden.

13. Verfahren nach Anspruch 12, dadurch gekennzeichnet, daß die Zusammenfassung durch Mittelwertbildung über die einzelnen ermittelten Korrekturwerte durchgeführt wird, wobei auch die Positionen der einzelnen Korrekturwerte gemittelt werden.

14. Verfahren nach Anspruch 12, dadurch gekennzeichnet, daß die Zusammenfassung durch Filterung, insbesondere Tiefpaßfilterung, der ermittelten Korrekturwerte durchgeführt wird.

15. Verfahren nach einem der vorhergehenden Ansprüche 5 bis 14, dadurch gekennzeichnet, daß eine bestimmte Anzahl von Korrekturwerten zu Beginn einer stationären Betriebsphase bei der Zusammenfassung ignoriert werden.

16. Verfahren nach einem der vorhergehenden Ansprüche, dadurch gekennzeichnet, daß für die Kennfeldanpassung die Stützstellen der Interpolationsstützstellengruppe für den repräsentativen Korrekturwert ausgewählt werden.

17. Verfahren nach Anspruch 16, dadurch gekennzeichnet, daß die Korrekturwerte $\Delta Y_i$ für die Stützstellen (30) der Interpolationsstützstellengruppe (G3) des repräsentativen Korrekturwertes nach der folgenden Vorschrift bestimmt werden:

$$\Delta y_i = \gamma \delta \omega_i \Delta y_{ges} \quad i = 1,...,n + 1$$

mit

$$w_i = \prod_{j=1, j \neq i}^{n+1} d_j \quad \text{und} \quad \delta = \frac{\sum_{i=1}^{n+1} w_i}{\sum_{i=1}^{n+1} w_i^2}$$

wobei

$\Delta y_{ges} =$     Wert der Korrekturgröße für das Korrekturdatun
$d_j =$     Abstände zu den Stutzstellen
$n =$     Dimension des Eingangsraums des Kennfolds ist.

18. Verfahren nach einem der vorhergehenden Ansprüche, dadurch gekennzeichnet, daß bei der Anpassung ein Korrektur-Kriterium berücksichtigt wird, das angibt, ob eine Kennfeldanpassung noch durch Änderung von Kennfeldwerten bestimmter vorhandener Stützstellen (30) möglich ist und daß für den Fall, daß nach dem Korrektur-Kriterium eine Kennfeldanpassung nicht mehr im Rahmen der Änderung von Kennfeldwerten bestimmter vorhandener Stützstellen (30) möglich ist, die Stützstellenverteilung durch Verschiebung einzelner Stützstellen und/oder durch Hinzufügung neuer und/oder Löschung bereits vorhandener Stützstellen verändert wird.

19. Verfahren nach Anspruch 18, dadurch gekennzeichnet, daß als Korrektur-Kriterium der gemittelte oder tiefpaßgefilterte Absolutwert der jeweils ermittelten Korrekturwerte mit einem vorgegebenen Grenzwert verglichen wird und daß nach dem Korrektur-Kriterium die Änderung der Kennfeldwerte von ausgewählten Stützstellen dann nicht mehr möglich ist, wenn der Absolutwert den vorgegebenen Grenzwert überschreitet.

20. Verfahren nach Anspruch 19, dadurch gekennzeichnet, daß in dem Fall, daß der Absolutwert den vorgegebenen Grenzwert überschreitet, die Stützstellendichte im Bereich eines ermittelten repräsentativen Korrekturwertes durch Verschiebung der Stützstellen der Interpolationsstützstellengruppe (G3) in Richtung des repräsentativen Korrekturwertes vergrößert wird.

21. Verfahren nach Anspruch 20, dadurch gekennzeichnet, daß die Verschiebungen $\Delta X_i$ der Stützstellen der Interpolationsstützstellengruppe (G3) des repräsentativen Korrekturwertes nach der folgenden Vorschrift berechnet werden:

$$\Delta_{x_i} = inc \cdot sign(\underline{d}_i).$$

22. Verfahren nach Anspruch 18, dadurch gekennzeichnet, daß bei der Hinzufügung einer neuer Stützstelle die neue Stützstelle an der Position (32) des repräsentativen Korrekturwertes in das Kennfeld eingetragen wird.

23. Verfahren nach Anspruch 18 oder 22, dadurch gekennzeichnet, daß bei der Löschung einer bereits vorhandenen Stützsteile diejenige Stützstelle (30) mit dem minimalen Informationsgehalt ausgewählt wird.

24. Verfahren nach Anspruch 23, dadurch gekennzeichnet, daß der Informationsgehalt einer Stützstelle durch den Absolutwert des Fehlers, der beim Weglassen der Stützstelle und Interpolation an deren Position entsteht, bestimmt wird.

**25.** Verfahren nach Anspruch 23 oder 24, dadurch gekennzeichnet, daß die Anpassung des Kennfeldes durch Hinzufügung der neuen und Löschung der bereits vorhandenen Stützstelle nur dann ausgeführt wird, wenn das Kennfeld durch Hinzufügung der neuen Stützstelle eine größere Korrektur erfährt als durch die Löschung der bereits vorhandenen Stützstelle.

**26.** Verfahren nach einem der Ansprüche 22 bis 25, dadurch gekennzeichnet, daß falls der repräsentative Korrekturwert näher an einer bereits vorhandenen Stützstelle liegt, als ein vorgegebener Mindestabstand, keine neue Stützstelle eingetragen wird, sondern die vorhandene benachbarte Stützstelle nach der Vorschrift:

$$x_i^{adapt} = \beta \ x_i^{alt} + (1 - \beta) \ x_i^{neu} \text{ mit } i = 1,...,n; \ 0 \leq \beta \leq 1$$

$$y_{adapt} = \beta y_{alt} + (1 - \beta) y_{neu}$$

korrigiert wird.

**27.** Verfahren nach einem der Ansprüche 22 bis 26, dadurch gekennzeichnet, daß wenn das Verhältnis von Korrekturwert zum Abstand der nächstgelegenen Stützstelle einen vorgegebenen Wert übersteigt, nicht eine neue Stützstelle an der Position des repräsentativen Korrekturwertes eingetragen wird, sondern stattdessen die nächstgelegene Stützstelle korrigiert wird.

**28.** Verfahren nach einem der vorhergehenden Ansprüche, dadurch gekennzeichnet, daß bei der Kennfeldanpassung berücksichtigt wird, ob die ermittelten Korrekturwerte eine gemeinsame Tendenz aufweisen und daß, falls dies der Fall ist, ein additiver und/oder multiplikativer Korrekturparameter ($C_0$, $C_1$) ermittelt wird, der bei späteren Kennfeldzugriffen mit dem ausgelesenen Kennfeldwert verrechnet wird.

**29.** Verfahren nach Anspruch 28, dadurch gekennzeichnet, daß der additive Korrekturparameter $C_0$ nur aus Korrekturwerten ermittelt wird, die in Bereichen des Kennfeldes gebildet wurden, in denen die Absolutwerte der Kennfeldwerte eine bestimmte Obergrenze nicht überschreiten.

**30.** Verfahren nach Anspruch 29, dadurch gekennzeichnet, daß der multiplikative Korrekturparameter ($C_1$) nur aus Korrekturwerten ermittelt wird, die in Bereichen des Kennfeldes gebildet wurden, in denen die Absolutwerte der Kennfeldwerte eine bestimmte Untergrenze nicht unterschreiten.

**31.** Verfahren nach einem der Ansprüche 28 bis 30, dadurch gekennzeichnet, daß der additive Korrekturparameter nach der Vorschrift:

$$c_0(k) = c0(k\text{-}1) + q0_{add}\Delta Y(k) + q1_{add}\Delta Y(k\text{-}1)$$

ermittelt wird.

**32.** Verfahren nach einem der Ansprüche 28 bis 31, dadurch gekennzeichnet, daß der multiplikative Korrekturparameter $C_1$ nach der Vorschrift:

$$c_1(k) = c_1(k\text{-}1) + q0_{mult}\Delta Y(k) + q1_{mult}\Delta Y(k\text{-}1).$$

ermittelt wird.

## Claims

**1.** Method for controlling/regulating processes in a motor vehicle, in particular combustion processes, gear changing processes or braking processes, having a family of characteristics which is arranged in a controller, the family of characteristics being covered by operating variables of the respective process and being represented by a number of support points, an information item about the value of the family of characteristics at the position of the support point being provided for each support point, at least one characteristic value being determined from the family of characteristics for a determined operating point of the process, which characteristic value governs this operating point, on the basis of which at least one control or model variable is formed for the emission of a control or modelling signal, the family of characteristics being automatically matched to a varying process behaviour, a correction value for a specific operating phase of the process being determined during the matching, a number of support points (30) (which are located around the determined correction value) of the family of characteristics being selected for the matching and a correction value ($\Delta Y_i$) being calculated for each selected support point as a function of the determined correction value ($\Delta Y_{tot}$), and characterized

- in that, in addition, an information item relating to the position of the support point (30) within the family of characteristics is provided in the controller for each support point (30) such that the support points (30) can be placed, irrespective of any fixed grid, at any required points in the input area of the family of characteristics,
- in that the position (32) of the correction value ($\Delta Y_{tot}$) is taken into account in such a manner that the selected support points (30) are matched inversely proportionally with respect to the position (32) of the determined correction value ($\Delta Y_{tot}$) within the family of characteristics, in accordance with the interpolation carried out in order to define the previously determined characteristic value.

2. Method according to Claim 1, characterized in that, for each family of characteristics matching operation, those support points (30) are selected which would also be used for interpolation of a characteristic value at the position of the determined correction value (32).

3. Method according to Claim 2, characterized in that the interpolation of a characteristic value at the position of the operating point (31) makes use of a specific number of those support points (30) which are most closely adjacent to the operating point (31) and are distributed as uniformly as possible around the operating point (31).

4. Method according to Claim 3, characterized in that the specific number corresponds to the dimension of the family of characteristics, that is to say to the number of operating variables covering the family of characteristics incremented by one, and in that the specific number of support points (30) which are most closely adjacent is used to form an interpolation support point group.

5. Method according to one of the preceding claims, characterized in that the matching of the family of characteristics is carried out only in a steady-state operating phase.

6. Method according to Claim 5, characterized in that the steady-state operating phase is identified by the fact that the operating point (31) remains within a limited range (G1 to G6) of the family of characteristics for a specific minimum number of accesses to the family of characteristics.

7. Method according to Claim 6, characterized in that the limited range (G1 to G6) is formed by the interpolation support point group of the respective operating point (31).

8. Method according to Claim 5, characterized in that the steady-state operating phase is also identified by the fact that the operating point (31) remains in two adjacent limited ranges (G1 to G6) for a specific minimum number of accesses to the family of characteristics.

9. Method according to one of Claims 5 to 8, characterized in that the matching of the family of characteristics is carried out at the end of the steady-state operating phase.

10. Method according to Claim 9, characterized in that the end of the steady-state operating phase is identified by the fact that, after the minimum number of accesses to the family of characteristics within the limited range (G1 to G6), the operating point (31) leaves this range.

11. Method according to Claim 9, characterized in that the end of the steady-state operating phase is also identified by the fact that, after the minimum number of accesses to the family of characteristics within the two adjacent limited ranges (G1 to G6), the operating point leaves these ranges.

12. Method according to one of the preceding claims, characterized in that correction values for the family of characteristics are calculated a plurality of times within a steady-state operating phase, in particular whenever access is made to the family of characteristics, in that the correction values determined during the steady-state operating phase are combined to form a single, representative correction value.

13. Method according to Claim 12, characterized in that the combination is carried out by averaging over the individual determined correction values, the positions of the individual correction values also being averaged.

14. Method according to Claim 12, characterized in that the combination is carried out by filtering, in particular low-pass filtering, of the determined correction values.

15. Method according to one of the preceding Claims 5 to 14, characterized in that a specific number of correction values at the start of a steady-state operating phase are ignored in the combination.

16. Method according to one of the preceding claims, characterized in that the support points in the interpolation support point group for the representative correction value are selected for matching of the family of characteristics.

17. Method according to Claim 16, characterized in that the correction values $\Delta Y_i$ for the support points (30) in the interpolation support point group (G3) of the representative correction value are determined in accordance with the following rule:

$$\Delta y_i = \gamma \delta \omega_i \Delta y_{tot} \qquad i = 1, \ldots, n + 1$$

where

$$\omega_i = \prod_{j=1, j \neq i}^{n+1} d_j \quad \text{and} \quad \delta = \frac{\sum_{i=1}^{n+1} \omega_i}{\sum_{i=1}^{n+1} \omega_i^2}$$

where

$\Delta y_{tot} =$     Value of the correction variable for the correction data
$d_j =$     Intervals between the support points
$n =$     Dimension of the input area of the family of characteristics.

18. Method according to one of the preceding claims, characterized in that, during the matching, a correction criterion is taken into account which indicates whether matching of the family of characteristics is still possible by varying characteristic values of specific existing support points (30), and in that, in the situation in which matching of the family of characteristics on the basis of the correction criterion is no longer possible in the course of varying characteristic values of specific existing support points (30), the support point distribution is changed by moving individual support points and/or by adding new and/or deleting already existing support points.

19. Method according to Claim 18, characterized in that, as the correction criterion, the averaged or lowpass-filtered absolute value of the respectively determined correction values is compared with a predetermined limit value, and in that, on the basis of the correction criterion, the variation in the characteristic values of selected support points is no longer possible if the absolute value exceeds the predetermined limit value.

20. Method according to Claim 19, characterized in that, in the situation in which the absolute value exceeds the predetermined limit value, the support point density in the region of a determined representative correction value is increased by moving the support points in the interpolation support point group (G3) in the direction of the representative correction value.

21. Method according to Claim 20, characterized in that the movements $\Delta x_i$ of the support points in the interpolation support point group (G3) of the representative correction value are calculated in accordance with the following rule:

$$\Delta x_i = \text{inc} \cdot \text{sign}(\underline{d}_i).$$

**22.** Method according to Claim 18, characterized in that, when a new support point is added, the new support point is entered into the family of characteristics at the position (32) of the representative correction value.

**23.** Method according to Claim 18 or 22, characterized in that, when an already existing support point is deleted, that support point (30) whose information content is the minimum is selected.

**24.** Method according to Claim 23, characterized in that the information content of a support point is defined by the absolute value of the error which occurs if the support point is omitted and interpolation is carried out at its position.

**25.** Method according to Claim 23 or 24, characterized in that the matching of the family of characteristics is carried out by adding the new support point and deleting the already existing support point only if the family of characteristics experiences a greater correction by addition of the new support point than by the deletion of the already existing support point.

**26.** Method according to one of Claims 22 to 25, characterized in that, if the representative correction value is closer to an already existing support point than a predetermined minimum distance, no new support point is entered but the existing adjacent support point is corrected in accordance with the rule:

$$x_i^{adapt} = \beta \; x_i^{alt} + (1 - \beta)x_i^{new} \text{ where } i = 1, \dots, n; \; 0 \leq \beta \leq 1$$

$$y_{adapt} = \beta y_{alt} + (1 - \beta)y_{new}.$$

**27.** Method according to one of Claims 22 to 26, characterized in that, if the ratio of the correction value to the distance to the closest support point exceeds a predetermined value, no new support point is entered at the position of the representative correction value but, instead of this, the closest support point is corrected.

**28.** Method according to one of the preceding claims, characterized in that the matching of the family of characteristics takes account of whether the determined correction values have a common tendency and in that, if this is the case, an additive and/or multiplicative correction parameter ($C_0$, $C_1$) is determined which is taken into account with the read characteristic value in subsequent accesses to the family of characteristics.

**29.** Method according to Claim 28, characterized in that the additive correction parameter $C_0$ is determined only from correction values which have been formed in regions of the family of characteristics in which the absolute values of the characteristic values do not exceed a specific upper limit.

**30.** Method according to Claim 29, characterized in that the multiplicative correction parameter ($C_1$) is determined only from correction values which have been formed in regions of the family of characteristics in which the absolute values of the characteristic values are not less than a specific lower limit.

**31.** Method according to one of Claims 28 to 30, characterized in that the additive correction parameter is determined in accordance with the rule:

$$c_0(k) = c0 \; (k-1) + q0_{add}\Delta Y(k) + q1_{add}\Delta Y(k-1)$$

**32.** Method according to one of Claims 28 to 31, characterized in that the multiplicative correction parameter $C_1$ is determined in accordance with the rule:

$$c_1(k) = c_1 \; (k-1) + q0_{mult}\Delta Y(k) + q1_{mult}\Delta Y(k-1).$$

**Revendications**

**1.** Procédé de commande/régulation de processus dans un véhicule automobile, notamment des opérations de combustion, de changement de vitesse ou de freinage, comprenant un champ de caractéristiques dans un appareil de commande, le champ de caractéristiques étant sous-tendu par les grandeurs de fonctionnement du processus respectif, et représenté par un nombre de points d'appui,

- pour chaque point d'appui, il est prévu une information relative à la valeur du champ de caractéristiques à l'endroit du point d'appui,
- pour un point de fonctionnement obtenu du processus, on détermine au moins une valeur de champ de caractéristiques, déterminante pour ce point de fonctionnement et, en tenant compte, on forme au moins une grandeur de commande ou grandeur modèle pour donner un signal de commande ou de modélisation,
- le champ de caractéristiques est adapté automatiquement à une modification du comportement du procédé,
- lors de l'adaptation, on détermine une valeur de correction pour une certaine phase de fonctionnement du procédé,
- un nombre de points d'appui (30) entourant la valeur de correction déterminée dans le champ de caractéristiques est sélectionné pour l'adaptation, et pour chaque point d'appui sélectionné, on calcule une valeur de correction ($\Delta Y_i$) en fonction de la valeur de correction obtenue ($\Delta Y_{ges}$),

caractérisé en ce que

dans l'appareil de commande, pour chaque point d'appui (30), on prévoit en outre une information relative à la position du point d'appui (30) à l'intérieur du champ de caractéristiques pour que les points d'appui (30) puissent être placés, indépendamment d'une trame fixe, à un endroit quelconque de l'espace d'entrée du champ de caractéristiques,

- on tient compte de la position (32) de la valeur de correction ($\Delta Y_{ges}$) pour que les points d'appui sélectionnés (30) soient adaptés de façon inversement proportionnelle par rapport à la position (32) de la valeur de correction obtenue ($\Delta Y_{ges}$) à l'intérieur du champ de caractéristiques, en fonction de l'interpolation acceptée pour définir la valeur du champ de caractéristiques déterminé précédemment.

2. Procédé selon la revendication 1,
   caractérisé en ce que
   pour l'adaptation du champ de caractéristiques, on sélectionne les points d'appui (30) qui serviraient également à l'interpolation d'une valeur de champ de caractéristiques à la position de la valeur de correction obtenue (32).

3. Procédé selon la revendication 2,
   caractérisé en ce que
   pour l'interpolation d'une valeur de champ de caractéristiques à la position du point de fonctionnement (31), on utilise un nombre déterminé de points d'appui (30) les plus proches du point de fonctionnement (31), qui sont répartis aussi régulièrement que possible autour du point de fonctionnement (31).

4. Procédé selon la revendication 3,
   caractérisé en ce que
   le nombre déterminé correspond à la dimension du champ de caractéristiques, c'est-à-dire du nombre augmenté d'une unité des grandeurs de fonctionnement qui sous-tendent le champ de caractéristiques et, par le nombre déterminé des points d'appui (30) les plus voisins, on forme un groupe de points d'appui d'interpolation.

5. Procédé selon l'une des revendications précédentes,
   caractérisé en ce que
   l'adaptation du champ de caractéristiques ne se fait que dans une phase de fonctionnement stationnaire.

6. Procédé selon la revendication 5,
   caractérisé en ce qu'
   on reconnaît la phase de fonctionnement stationnaire à ce que le point de fonctionnement (31) reste, pour un nombre minimum déterminé d'accès au champ de caractéristiques, à l'intérieur d'un domaine limité (G1-G6) du champ de caractéristiques.

7. Procédé selon la revendication 6,
   caractérisé en ce que
   la plage limitée (G1-G6) est formée par le groupe des points d'appui d'interpolation du point de fonctionnement respectif.

**8.** Procédé selon la revendication 5,
caractérisé en ce que
l'on reconnaît la phase de fonctionnement stationnaire à ce que le point de fonctionnement (31) séjourne dans deux domaines limités adjacents (G1-G6) pendant un nombre minimum déterminé d'accès au champ de caractéristiques.

**9.** Procédé selon l'une des revendications 5 à 8,
caractérisé en ce que
l'adaptation du champ de caractéristiques se fait à la fin de la phase de fonctionnement stationnaire.

**10.** Procédé selon la revendication 9,
caractérisé en ce que
la fin de la phase de fonctionnement stationnaire se reconnaît à ce que le point de fonctionnement (31) quitte le domaine après un nombre minimum d'accès au champ de caractéristiques à l'intérieur du domaine délimité (G1-G6).

**11.** Procédé selon la revendication 9,
caractérisé en ce qu'
on reconnaît la fin de la phase de fonctionnement stationnaire à ce qu'après un nombre minimum d'accès au champ de caractéristiques, à l'intérieur de deux domaines délimités voisins (G1-G6), le point de fonctionnement quitte ces domaines.

**12.** Procédé selon l'une quelconque des revendications précédentes,
caractérisé en ce que
plusieurs fois pendant une phase de fonctionnement stationnaire, notamment lors d'un accès au champ de caractéristiques, on calcule des valeurs de correction pour le champ de caractéristiques, et l'on réunit ces valeurs de correction obtenues pendant la phase de fonctionnement stationnaire en une unique valeur de correction représentative.

**13.** Procédé selon la revendication 12,
caractérisé en ce qu'
on réunit en formant la moyenne des différentes valeurs de correction obtenues et l'on forme également la valeur moyenne des positions des différentes valeurs de correction.

**14.** Procédé selon la revendication 12,
caractérisé en ce qu'
on réunit en filtrant, notamment par un filtrage passe-bas, les valeurs de correction obtenues.

**15.** Procédé selon l'une des revendications 5 à 14,
caractérisé en ce que
pour la réunion, on ignore un nombre déterminé de valeurs de correction correspondant au début d'une phase de fonctionnement stationnaire.

**16.** Procédé selon l'une des revendications précédentes,
caractérisé en ce que
pour l'adaptation du champ de caractéristiques, on sélectionne les points d'appui du groupe des points d'appui d'interpolation pour la valeur de correction représentative.

**17.** Procédé selon la revendication 16,
caractérisé en ce qu'
on définit les valeurs de correction ($\Delta Y_i$) pour les points d'appui (30) du groupe de points d'appui d'interpolation (G3) de la valeur de correction représentative, selon la prescription suivante :

$$\Delta y_i = \gamma \delta \omega_i \Delta y_{ges} \qquad i = 1,...,n+1$$

avec

$$w_i = \prod_{j=1, j \neq i}^{n+1} d_j \qquad \text{et} \qquad \delta = \frac{\sum_{i=1}^{n+1} w_i}{\sum_{i=1}^{n+1} w_i^2}$$

relations dans lesquelles

$\Delta Y_{ges}$       représente la valeur de la grandeur de correction pour la donnée de correction
$d_j$          représente la distance par rapport au points d'appui,
n          représente la dimension de l'espace d'entrée du champ de caractéristiques.

**18.** Procédé selon l'une des revendications précédentes,
caractérisé en ce que
lors de l'adaptation, on tient compte d'un critère de correction qui indique si une adaptation de champ de caractéristiques est encore possible par modification des valeurs du champ de caractéristiques pour différents points d'appui (30) existants et, dans le cas où selon le critère de correction, une adaptation du champ de caractéristiques n'est plus possible dans le cadre d'une modification des valeurs de champ de caractéristiques de certains points d'appui (30) existants, on modifie la répartition des points d'appui par décalage de différents points d'appui et/ou adjonction de nouveaux points d'appui et/ou effacement de points d'appui existants.

**19.** Procédé selon la revendication 18,
caractérisé en ce que
comme critère de correction, on utilise la valeur absolue moyenne ou résultant d'un filtrage passe-bas des valeurs de correction déterminées de manière respective en les comparant à un seuil prédéterminé et, après le critère de correction, il n'est plus possible de modifier les valeurs du champ de caractéristiques des points d'appui sélectionnés si la valeur absolue dépasse le seuil prédéterminé.

**20.** Procédé selon la revendication 19,
caractérisé en ce que
dans le cas où la valeur absolue dépasse la valeur limite prédéterminée, on augmente la densité des points d'appui dans la zone d'une valeur de correction obtenue, représentative, par décalage des points d'appui du groupe des points d'appui d'interpolation (G3) dans la direction de la valeur de correction représentative.

**21.** Procédé selon la revendication 20,
caractérisé en ce que
les décalages ($\Delta X_i$) des points d'appui du groupe des points d'appui d'interpolation (G3) de la valeur de correction représentative, se calculent selon la prescription suivante :

$$\Delta_{xi} = \text{inc} \cdot \text{sign}(d_i).$$

**22.** Procédé selon la revendication 18,
caractérisé en ce que
lors de l'adjonction d'un nouveau point d'appui, on enregistre le nouveau point d'appui à la position (32) de la valeur de correction représentative dans le champ de caractéristiques.

**23.** Procédé selon la revendication 18 ou 22,
caractérisé en ce qu'
à l'effacement d'un point d'appui existant, on sélectionne le point d'appui (30) ayant le contenu minimum en informations.

**24.** Procédé selon la revendication 23,
caractérisé en ce que
le contenu en informations d'un point d'appui est défini par la valeur absolue de l'erreur créée si l'on supprime le point d'appui et si l'on interpole sur une autre position.

**25.** Procédé selon les revendications 23 ou 24,

caractérisé en ce que

l'adaptation du champ de caractéristiques par adjonction d'un nouveau point d'appui et effacement du point d'appui existant, n'est exécutée que si le champ de caractéristiques subit une valeur de correction importante par l'adjonction du nouveau point d'appui, par rapport à l'effacement du point d'appui existant.

26. Procédé selon l'une des revendications 22 à 25,
caractérisé en ce que
dans le cas où la valeur de correction représentative est plus proche d'un point d'appui existant que d'une distance minimale prédéterminée, on n'enregistre pas un nouveau point d'appui, mais on corrige le point d'appui voisin existant en appliquant la prescription :

$$x_i^{adapt} = \beta\, x_i^{anc} + (1 - \beta)x_i^{nou} \qquad \text{avec } i = 1,...,n;\; 0 \le \beta \le 1$$

$$y_{adapt} = \beta y_{anc} + (1 - \beta)y_{nou}$$

27. Procédé selon l'une des revendications 22 à 26,
caractérisé en ce que
si le rapport de la valeur de correction à la distance du point d'appui le plus proche dépasse une valeur donnée, on n'enregistre pas un nouveau point d'appui à la position de la valeur de correction représentative mais on corrige au lieu de cela le point d'appui le plus proche.

28. Procédé selon l'une des revendications précédentes,
caractérisé en ce que
lors de l'adaptation du champ de caractéristiques, on veille à ce que les valeurs de correction obtenues présentent une tendance commune et, si cela est le cas, on détermine un paramètre de correction ($C_0$, $C_1$) adaptatif et/ou multiplicatif qui est utilisé lors des accès ultérieurs au champ de caractéristiques, avec la valeur lue dans le champ de caractéristiques.

29. Procédé selon la revendication 28,
caractérisé en ce que
le paramètre de correction additif ($C_0$) est déterminé seulement à partir de valeurs de correction qui se situeraient dans des domaines du champ de caractéristiques dans lesquels la valeur absolue des valeurs du champ de caractéristiques ne dépasse pas une certaine limite supérieure.

30. Procédé selon la revendication 29,
caractérisé en ce que
le paramètre de correction multiplicatif ($C_1$) ne se détermine qu'à partir de valeurs de correction formées dans des domaines du champ de caractéristiques dans lesquels la valeur absolue des valeurs du champ de caractéristiques ne dépasse pas, vers le bas, une certaine limite inférieure.

31. Procédé selon l'une des revendications 28 à 30,
caractérisé en ce que le paramètre de correction additif est obtenu selon la prescription suivante :

$$C_0(k) = C_0(k-1) + qo_{add}\Delta Y(k) + q1_{add}\Delta Y(k-1)$$

32. Procédé selon l'une des revendications 28 à 31,
caractérisé en ce qu'
on définit le paramètre de correction multiplicatif ($C_1$) selon la prescription suivante :

$$C_1(k) = C_1(k-1) + qo_{mult}\Delta Y(k) + q1_{mult}\Delta Y(k-1).$$

Fig.1

Fig.2

Fig.3

Fig.4

Fig.5

Fig.6

Fig.7

Fig. 8

Fig.9

Fig. 10

Fig.11

Fig.12